# FASCICULE DE BREVET EUROPEEN

(11) **EP 3 265 261 B1**
(45) Date de publication et mention de la délivrance du brevet: **04.08.2021**
(21) Numéro de dépôt: 16719439.8
(22) Date de dépôt: 03.03.2016
(51) Int. Cl.: B23K 1/00, B23K 35/30

(54) **PROCEDE DE D'ASSEMBLAGE PAR BRASAGE DE DEUX ELEMENTS VIA UN COMPOSE INTERMETALLIQUE**
VERFAHREN ZUR LÖTVERBINDUNG VON ZWEI ELEMENTEN ÜBER EINE INTERMETALLISCHE VERBINDUNG
METHOD OF ASSEMBLING BY BRAZING OF TWO ELEMENTS VIA AN INTERMETALLIC COMPOUND

(30) Priorité: 04.03.2015 FR 1551818
(43) Date de publication de la demande: 10.01.2018
(73) Titulaire: Safran Electrical & Power, 31702 Blagnac Cedex (FR)
(72) Inventeur: CHARLAS, Mathieu, 31700 Blagnac (FR)
(74) Mandataire: Cabinet Camus Lebkiri
(86) Numéro de dépôt international: PCT/FR2016/050489
(87) Numéro de publication internationale: WO 2016/139429

(56) Documents cités:
- JP-A- 2004 306 121
- US-A1- 2005 253 282
- US-A1- 2007 245 852
- US-A1- 2008 164 488
- US-A1- 2011 315 315
- US-A1- 2012 055 586

## Description

### DOMAINE TECHNIQUE DE L'INVENTION

L'invention se rapporte à un procédé de brasage pour assembler deux éléments via un composé intermétallique conformément au préambule de la revendication 1 (voir par exemple US 2005/253282 A1), et est applicable, de façon non limitative, aux composants électroniques de puissance utilisés dans le domaine aéronautique. D'autres applications sont envisageables, par exemple, dans le domaine du génie électrique pour l'assemblage de moteurs électriques.

### ETAT DE LA TECHNIQUE

Le développement des solutions d'électronique de puissance aéronautique ouvre actuellement la porte à de nombreuses possibilités d'optimisation de consommation énergétiques à bord d'un avion. Le secteur de l'électronique de puissance a vu l'émergence de composants semi-conducteurs utilisant des matériaux dit « grand gap » tels que le carbure du silicium ou encore le nitrure de galium. Les composants développés à partir de ces matériaux semi-conducteurs présentent également l'avantage de pouvoir fonctionner à plus haute température que les générations précédentes. Comme de tels composants sont capables de fonctionner à haute température, ceux-ci peuvent être utilisés dans des zones où la température ne permettait pas jusqu'alors d'envisager de faire fonctionner correctement une électronique sans un système de refroidissement complexe et lourd.

Cependant, si le fonctionnement de semi-conducteurs « grand gap » ne pose plus de problème particulier dans des environnements de haute température, les solutions d'assemblage de ces composants utilisant ces semi-conducteurs représentent toujours un challenge.

A titre illustratif, dans le cas d'un composant (une puce par exemple) en carbure de silicium dont la température de fonctionnement nominale espérée est de 300°C, la solution de brasage par fusion d'un alliage métallique utilisée pour assembler la puce en carbure de silicium sur un circuit électronique doit présenter une température de fusion très nettement supérieure à la température de fonctionnement nominale. Cet écart de température permet d'obtenir une fiabilité de fonctionnement optimale. Néanmoins, en augmentant trop fortement cette température de fusion, il y a un risque très important d'endommager le reste du circuit électronique.

Il est connu d'utiliser un procédé de brasure par diffusion. Dans ce cas, deux alliages différents sont utilisés, l'un à basse température de fusion, l'autre à plus haute température de fusion. L'idée est alors de faire fondre l'alliage à basse température de fusion et d'attendre à cet état fondu que l'alliage à plus haute température de fusion diffuse peu à peu à travers le liquide pour « précipiter un composé intermétallique » à très haute température de fusion. Le principal problème de cette solution est sa durée de mise en œuvre qui la rend couteuse. Une autre source de difficulté provient de la complexité de gestion des précipitations de composées intermétalliques. Il est en effet difficile de s'assurer de l'homogénéité du joint formé. Ce dernier est donc particulièrement fragilisé par cette hétérogénéité.

Il est également connu d'utiliser un procédé de brasure par frittage de poudres métalliques. Dans ce cas, de la poudre de métal (en général de l'argent) est intercalée entre le composant et le substrat sur lequel elle doit être solidarisée. Cette poudre de métal est ensuite agglomérée sous l'effet d'une pression de quelques dizaines de MPa et sous une température d'environ 300°C. Il convient cependant de noter que les solutions de frittage connues utilisent de la poudre d'argent. Or ce métal présente une forte tendance à l'électro migration. Ces électro-migrations entrainent des contacts électriques entre des points à potentiel différent et donc des casses des composants. En outre, ces solutions présentent un fort risque d'endommagement des puces due à la mise en œuvre sous pression (de 5 à 40MPa).

### DESCRIPTION GENERALE DE L'INVENTION

L'invention a donc notamment pour but de remédier aux inconvénients évoqués précédemment. Dans ce contexte, l'invention vise à proposer un procédé de brasage pour assembler deux éléments qui seront mis en œuvre dans un environnement haute température. En outre, le procédé de brasage pour assembler deux éléments présente une mise en œuvre aisée, peu couteuse et un temps de mise en œuvre réduit.

A cette fin, l'invention porte sur un procédé de brasage pour assembler deux éléments tel que défini dans la revendication 1, ledit procédé comportant les étapes de :
- Sélectionner deux matériaux de brasage aptes à générer, lorsqu'ils sont chauffés et fusionnés, un composé intermétallique ayant une température de fusion supérieure à la température de fusion de chacun des matériaux de brasage sélectionnés pris isolément,
- Positionner les deux matériaux de brasage sélectionnés entre les deux éléments,
- Chauffer et fusionner les deux matériaux de brasage sélectionnés pour atteindre sensiblement la température de fusion de chacun des matériaux de brasage sélectionnés de sorte à obtenir la précipitation d'un composé intermétallique ayant une température de fusion supérieure à la température de fusion de chacun des matériaux de brasage sélectionnés pris isolément.

En d'autres termes, le joint d'assemblage obtenu est ainsi composé d'un composé (ou précipité) intermétallique, très stable et à très haute température de fusion. Un avantage de cette technologie est d'autoriser un brasage à une température relativement raisonnable tandis que le joint créé est efficient jusqu'à la température de fusion du composé intermétallique qui est supérieure à la température de fonctionnement nominale des deux éléments et supérieure à la température de fusion de chacun des matériaux de brasage sélectionnés pris isolément. Cette température de fonctionnement dans le domaine aéronautique peut être de l'ordre de 300°C.

En outre, un apport de la présente invention est de proposer un mélange de deux alliages à l'état liquide-liquide, au contraire des solutions connues d'assemblage de composant associant liquide-métal et jouant ainsi sur la diffusion atomique du liquide dans le métal. Dans le cas de l'invention, le mélange est instantané. Cette solution est donc innovante en ce qu'elle permet de raccourcir les temps de mise en œuvre.

Outre les caractéristiques principales qui viennent d'être mentionnées, le procédé de brasage selon l'invention peut présenter une ou plusieurs caractéristiques supplémentaires ci-dessous, considérées individuellement ou selon toutes les combinaisons techniquement réalisables :
- Chaque matériau de brasage sélectionné est un alliage ou un métal pur ;
- L'un des deux matériaux de brasage sélectionnés est un alliage de type Au80Sn20 et l'autre des deux matériaux de brasage sélectionnés est de l'étain pur ;
- Chaque matériau de brasage sélectionné se présente sous la forme de :
   - Feuillard, ou
   - poudre mélangée à un matériau organique à forte viscosité.
- Le matériau organique à forte viscosité joue le rôle d'agent désoxydant;
- La poudre mélangée à un matériau organique à forte viscosité est positionnée entre les deux éléments au moyen d'une seringue ;
- Un des deux éléments est formé par un substrat et l'autre des deux éléments est formé par un composant électronique ;
- L'écart entre chacune des deux températures de fusion des deux matériaux de brasage sélectionnés et la température de fusion du composé intermétallique est supérieur à 100°C.

D'autres caractéristiques et avantages de l'invention ressortiront clairement de la description qui en est donnée ci-après, à titre indicatif et nullement limitatif, en référence aux figures annexées ci-jointes parmi lesquelles :
- la figure 1 illustre un synoptique des étapes du procédé conforme à l'invention ;
- la figure 2 illustre un diagramme de changement de phase binaire étain et or ;
- la figure 3 illustre de façon schématique un exemple de réalisation d'un dispositif assemblé à l'aide du procédé suivant l'invention.

Pour des raisons de clarté, seuls les éléments utiles pour la compréhension de l'invention ont été représentés et ceci, sans respect de l'échelle et de manière schématique. En outre, les éléments similaires situés sur différentes figures comportent des références identiques.

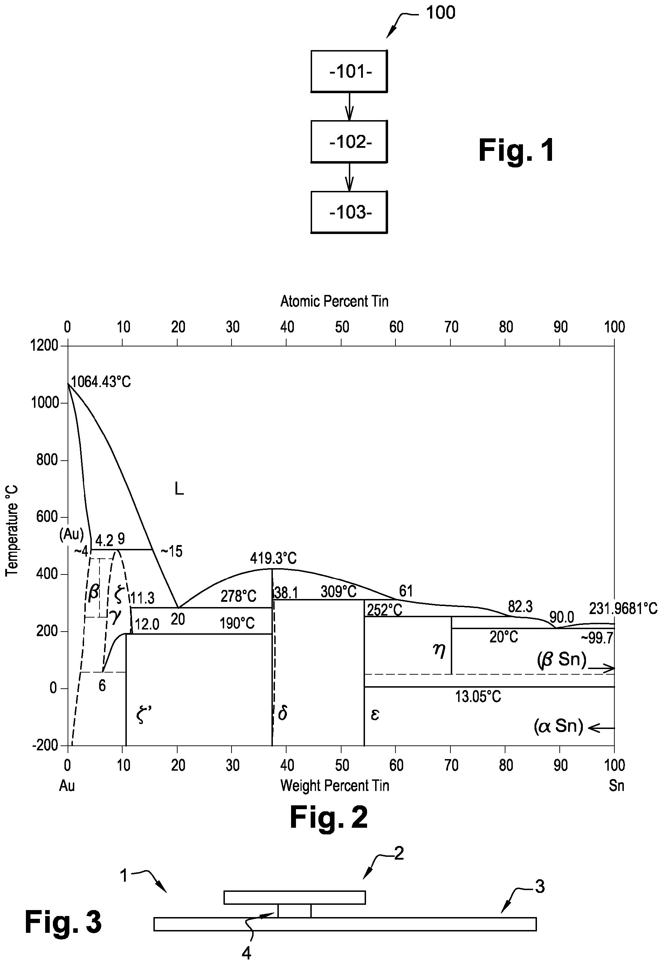

La figure 1 illustre les étapes du procédé 100 de brasage pour assembler deux éléments conforme à l'invention. De façon non limitative, les deux éléments sont formés par un premier élément de type substrat et un deuxième élément de type composant électronique, tel qu'une puce électronique.

Le procédé 100 de brasage comporte une étape 101 de sélection de deux matériaux de brasage aptes à générer, lorsqu'ils sont chauffés et fusionnés, un composé intermétallique ayant une température de fusion supérieure à la température de fusion de chacun des matériaux sélectionnés pris isolément.

Il convient de noter que chaque matériau de brasage sélectionné est un alliage ou un métal pur. A titre d'exemple non limitatif, il est possible de sélectionner un premier matériau de brasage de type métal pur, par exemple de l'étain pur dont la température de fusion est de 232°C. En outre, il est possible de sélectionner un deuxième matériau de brasage de type alliage, par exemple l'alliage Au80Sn20 dont la température de fusion est de 278°C. Après avoir chauffé et fusionné l'étain pur et l'alliage Au80Sn20, le composé intermétallique obtenu sera un alliage de type AuSn dont la température de fusion est de 419°C.

Par exemple, la figure 2 illustre un diagramme de changement de phase binaire étain - or. A titre d'exemple, si les deux éléments solidarisés via le composé intermétallique doivent être mis en œuvre dans un environnement de fonctionnement, tel qu'un moteur d'avion, avoisinant les 300°C, alors il faut un composé intermétallique dont la température de fusion est nettement supérieure à 300°C. Au regard du diagramme de changement de phase binaire étain - or illustré sur la figure 2, il est avantageux de sélectionner le composé intermétallique formé par l'alliage AuSn dont la température de fusion est de 419,3°C. En choisissant le composé intermétallique AuSn dont la température de fusion est de 419,3°C, le composé intermétallique est formé d'un alliage présentant 62,5% en masse d'or et 37,5% en masse d'étain. Ainsi, de façon non limitative, pour obtenir le composé intermétallique formé d'un alliage présentant 62,5% en masse d'or et 37,5% en masse étain, il est possible d'utiliser :
- Un premier matériau de brasage formé par l'alliage Au80Sn20 dont la température de fusion est de 278 °C et la masse représente 72% en masse du composé intermétallique, cet alliage Au80Sn20 comporte 20% en masse d'étain + 80% en masse d'or, et
- Un deuxième matériau de brasage formé par de l'étain pur présentant une température de fusion de 232 °C et dont masse représente 28% du composé intermétallique.

Le fait de chauffer et fusionner cette association permet d'obtenir un alliage de 62,5% en masse d'or + 37,5% en masse d'étain, soit la proportion précise du composé intermétallique AuSn.

Le procédé 100 de brasage comporte en outre une étape de positionnement 102 des deux matériaux de brasage sélectionnés entre les deux éléments.

Chacun des deux matériaux de brasage cités précédemment peut se présenter sous forme de:
- préforme (également dénommé feuillard), ou
- poudre mélangée de façon homogène à un matériau organique à forte viscosité (couramment appelé « crème à braser »), le matériau organique à forte viscosité jouant le rôle d'agent désoxydant.

Par exemple, lorsque l'un ou les deux matériaux de brasage est (sont) présenté(s) sous la forme de poudre mélangée à un matériau organique à forte viscosité, il peut être positionné entre les deux éléments au moyen d'une seringue.

Le procédé 100 de brasage comporte également une étape 103 consistant à chauffer et fusionner les matériaux de brasage sélectionnés pour atteindre sensiblement la température de fusion de chacun des matériaux de brasage sélectionnés de sorte à obtenir la précipitation d'un composé intermétallique ayant une température de fusion supérieure à la température de fusion de chacun des matériaux sélectionnés pris isolément.

Selon l'exemple décrit, il est donc possible en chauffant autour de 309°C d'atteindre la température de fusion des deux matériaux de brasage sélectionnés de manière à les fusionner (autrement dit les mélanger) afin de créer un composé intermétallique pur ayant une température de fusion de 419°C. Ainsi, la température du procédé de brasage n'a pas dépassé les 309°C ce qui permet de préserver l'ensemble des composants électroniques situés sur le substrat. Pour autant, le substrat et la puce électronique pourront être positionnés dans un environnement dont la température de fonctionnement nominale dépasse les 309°C sans pour autant risquer d'être désolidarisé l'un de l'autre.

En d'autres termes, la présente invention consiste en une solution de brasage permettant d'assembler deux éléments, grâce à la fusion de deux métaux ou alliages de métaux, à une température permettant la précipitation d'un seul composé intermétallique, ayant un point de fusion supérieur aux températures de fusion des deux métaux ou alliages de métaux de départ. En d'autres termes, le procédé 100 selon l'invention permet d'obtenir un joint de brasage composé à 100% d'un composé intermétallique très stable dans le temps contrairement aux associations métallographiques complexes que l'on trouve généralement dans les alliages de brasures.

La figure 3 illustre un dispositif assemblé à l'aide du procédé suivant l'invention.

Un premier élément est formé par une puce électronique 2 et un deuxième élément est formé par un substrat 3, la puce électronique 2 le substrat 3 étant solidarisés entre eux via un composé intermétallique 4 obtenu via la fusion de deux matériaux de brasage. Le composé intermétallique 4 présente une température de fusion supérieure à la température de fusion de chacun des deux matériaux de brasage fusionnés.

## Revendications

1. Procédé (100) de brasage pour assembler deux éléments (2, 3), ledit procédé (100) comportant les étapes de :
- sélectionner (101) deux matériaux de brasage aptes à générer, lorsqu'ils sont chauffés et fusionnés, un composé intermétallique (4) ayant une température de fusion supérieure à une température de fonctionnement nominale des deux éléments et supérieure à la température de fusion de chacun des matériaux sélectionnés pris isolément,
- Positionner (102) les deux matériaux de brasage sélectionnés entre les deux éléments (2, 3),
le procédé étant **caractérisé par** :
- Chauffer (103) les deux matériaux de brasage sélectionnés pour atteindre la température de fusion de chacun des matériaux de brasage sélectionnés et les fusionner en les mélangeant à l'état liquide-liquide de sorte à obtenir la précipitation d'un composé intermétallique (4) ayant une température de fusion supérieure à la température de fonctionnement nominale des deux éléments et supérieure à la température de fusion de chacun des matériaux de brasage sélectionnés pris isolément.

2. Procédé (100) de brasage selon la revendication 1 précédente selon lequel chacun des matériaux de brasage sélectionnés est un alliage ou un métal pur.

3. Procédé (100) de brasage selon l'une des revendications 1 ou 2 selon lequel l'un des deux matériaux de brasage sélectionnés est un alliage de type Au80Sn20 et l'autre des deux matériaux de brasage sélectionnés est de l'étain pur.

4. Procédé (100) de brasage selon l'une quelconque des revendications précédentes selon lequel chacun des matériaux de brasage sélectionnés se présente sous la forme de :
- Feuillard, ou
- poudre mélangée à un matériau organique à forte viscosité.

5. Procédé (100) de brasage selon la revendication précédente selon lequel le matériau organique à forte viscosité joue le rôle d'agent désoxydant.

6. Procédé (100) de brasage selon l'une des revendications 4 ou 5 précédentes selon lequel la poudre mélangée à un matériau organique à forte viscosité est positionnée entre les deux éléments (2, 3) au moyen d'une seringue.

7. Procédé (100) de brasage selon l'une quelconque des revendications précédentes selon lequel un des deux éléments (2, 3) est formé par un substrat (3) et l'autre des deux éléments est formé par un composant électronique (2).

8. Procédé (100) de brasage selon l'une quelconque des revendications précédentes selon lequel l'écart entre chacune des deux températures de fusion des deux matériaux de brasage sélectionnés et la température de fusion du composé intermétallique (4) est supérieur à 100 degrés.

## Patentansprüche

1. Lötverfahren (100) zum Verbinden von zwei Elementen (2, 3), wobei das genannte Verfahren (100) die Schritte umfasst:
- Auswählen (101) von zwei Lötmaterialien, die, wenn sie erhitzt und verschmolzen sind, geeignet sind, einen Zwischenmetall-Bestandteil (4) mit einer höheren Schmelztemperatur als eine nominale Funktionstemperatur der zwei Elemente und einer höheren Temperatur als die Schmelztemperatur jedes der ausgewählten Materialien einzeln betrachtet zu erzeugen,
- Positionieren (102) der zwei ausgewählten Lötmaterialien zwischen den zwei Elementen (2, 3),
wobei das Verfahren **gekennzeichnet ist durch**:
- Erhitzen (103) der zwei ausgewählten Lötmaterialien, um die Schmelztemperatur jedes der ausgewählten Lötmaterialien zu erreichen und sie zu verschmelzen, indem sie im flüssigen-flüssigen Zustand derart vermischt werden, dass die Fällung eines Zwischenmetall-Bestandteils (4) erreicht wird, der eine höhere Schmelztemperatur als die nominale Funktionstemperatur der zwei Elemente und eine höhere Temperatur als die Schmelztemperatur jedes der ausgewählten Lötmaterialien einzeln betrachtet aufweist.

2. Lötverfahren (100) gemäß dem voranstehenden Anspruch 1, gemäß dem jedes der ausgewählten Lötmaterialien eine Legierung oder ein reines Metall ist.

3. Lötverfahren (100) gemäß einem der Ansprüche 1 oder, gemäß dem eines der ausgewählten Lötmaterialien eine Legierung vom Typ Au80Sn20 ist und das andere der zwei ausgewählten Lötmaterialien reines Zinn ist.

4. Lötverfahren (100) gemäß irgendeinem der voranstehenden Ansprüche, gemäß dem jedes der ausgewählten Lötmaterialien die Form aufweist:
- eines Stahlbandes oder
- mit einem organischen Material mit starker Viskosität vermischten Pulvers.

5. Lötverfahren (100) gemäß dem voranstehenden Anspruch, gemäß dem das organische Material mit starker Viskosität die Rolle des Desoxidationsmittels spielt.

6. Lötverfahren (100) gemäß einem der voranstehenden Ansprüche 4 oder 5, gemäß dem das mit einem organischen Material mit starker Viskosität vermischte Pulver zwischen den zwei Elementen (2, 3) mittels einer Spritze angeordnet wird.

7. Lötverfahren (100) gemäß irgendeinem der voranstehenden Ansprüche, gemäß dem eines der zwei Elemente (2, 3) durch ein Substrat (3) gebildet wird und das andere der zwei Elemente durch einen elektronischen Bestandteil (2) gebildet wird.

8. Lötverfahren (100) gemäß irgendeinem der voranstehenden Ansprüche, gemäß dem der Unterschied zwischen den zwei Schmelztemperaturen der zwei ausgewählten Lötmaterialien und der Schmelztemperatur des Zwischenmetall-Bestandteils (4) größer ist als 100 Grad.

## Claims

1. Brazing method (100) for assembling two elements (2, 3), said method (100) comprising the steps of:
- selecting (101) two brazing materials that can generate, when they are heated and melted, an intermetallic compound (4) having a melting temperature which is higher than the nominal operating temperature of the two elements and which is higher than a melting temperature of each of the selected brazing materials taken individually,
- positioning (102) the two selected brazing materials between the two elements (2, 3), the method being **characterized in that**:
- heating (103) the two selected brazing materials in order to reach the melting temperature of each of the selected brazing materials and melting them by mixing them in the liquid-liquid state so as to achieve the precipitation of an intermetallic compound (4) having a melting temperature which is higher than the nominal operating temperature of the two elements and which is higher than the melting temperature of each of the selected brazing materials taken individually.

2. Brazing method (100) according to the preceding claim according to which each of the selected brazing materials is an alloy or a pure metal.

3. Brazing method (100) according to one of claims 1 or 2 according to which one of the two selected brazing materials is an alloy of Au80Sn20 type and the other of the two selected brazing materials is pure tin.

4. Brazing method (100) according to any of the preceding claims according to which each of the selected brazing materials is in the form of:
- a strip, or
- a powder mixed with a high viscosity organic material.

5. Brazing method (100) according to the preceding claim according to which the high viscosity organic material plays the role of deoxidising agent.

6. Brazing method (100) according to one of the preceding claims 4 or 5 according to which the powder mixed with a high viscosity organic material is positioned between the two elements (2, 3) using a syringe.

7. Brazing method (100) according to any of the preceding claims according to which one of the two elements (2, 3) is formed by a substrate (3) and the other of the two elements is formed by an electronic component (2).

8. Brazing method (100) according to any of the preceding claims according to which the difference between each of the two melting temperatures of the two selected brazing materials and the melting temperature of the intermetallic compound (4) is higher than 100 degrees.
